(19) Europäisches Patentamt / European Patent Office / Office européen des brevets

(11) **EP 3 238 959 B1**

(12) **EUROPEAN PATENT SPECIFICATION**

(45) Date of publication and mention
of the grant of the patent:
**05.08.2020 Bulletin 2020/32**

(51) Int Cl.:
***B60C 11/12*** *(2006.01)*        ***B60C 11/03*** *(2006.01)*
***B60C 11/13*** *(2006.01)*

(21) Application number: **16746645.7**

(22) Date of filing: **03.02.2016**

(86) International application number:
**PCT/JP2016/053142**

(87) International publication number:
**WO 2016/125814 (11.08.2016 Gazette 2016/32)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2015 JP 2015020279**

(43) Date of publication of application:
**01.11.2017 Bulletin 2017/44**

(60) Divisional application:
**20150285.3 / 3 656 580**

(73) Proprietor: **Bridgestone Corporation
Tokyo 104-8340 (JP)**

(72) Inventor: **HAYASHI, Shintaro
Chuo-ku
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 792 505        JP-A- S62 268 707
JP-A- 2012 001 161        JP-A- 2013 169 886
US-A1- 2010 212 792**

**Description**

Technical Field

The present invention relates to a pneumatic tire having a tread part partitioned by four main grooves, which extend in the tire circumferential direction, into a center land part, an outer intermediate land part adjoining the vehicle installation outer side of the center land part, an inner intermediate land part adjoining the vehicle installation inner side of the center land part, an outer shoulder land part adjoining the vehicle installation outer side of the outer intermediate land part, and an inner shoulder land part adjoining the vehicle installation inner side of the inner intermediate land part.

Background Art

A pneumatic tire is normally provided with a carcass ply laid across a pair of bead cores, a belt layer arranged on the tire radial outer side of the carcass ply, and a tread part arranged on the tire radial outer side of the belt layer.

In addition, a tread pattern of the tread part is devised in various ways (see Patent Literature 1) in order to improve various tire performance such as drainage efficiency, operation stability, a traction performance and a braking characteristics. Attention is also drawn to the disclosures of US2010/212792, EP2792505, JPS62-268707 and JP2013-169886.

Citation List

Patent Literature

Patent Literature 1: JP 2012-116306 A

Summary of Invention

Technical Problem

However, even such a tire has been required to have further improved operation stability while maintaining water film removal performance.

The present invention has been made in view of such a problem, and the object thereof is to provide a pneumatic tire having improved operation stability while maintaining water film removal performance.

Solution to Problem

A pneumatic tire according to the present invention is a pneumatic tire as claimed in claim 1.

As described above, since the sipes formed in the center land part do not open to the main groove adjoining the center land part on the vehicle installation outer side, it is possible to achieve both of: improvement of a quietness by suppressing noise generation such as sound due to impact in grounding of the sipes with the road surface and vibration of a tire due to impact input; and improvement of operation stability in straight driving by suppressing rigidity reduction at the center land part due to formation of the sipes. Furthermore, the improved quietness can be obtained since the mean angle of the sipes of the outer intermediate land part, which contributes largely to pass-by noise, gets close to the tire circumferential direction.

A mean angle of a sipe formed in the center land part may be larger than a mean angle of a sipe formed in the inner intermediate land part. This feature makes responses to input in cornering differ between sipes, and therefore disperses the register of noise. This can further improve the quietness.

A mean angle of a sipe formed in the center land part may be larger than a mean angle of a sipe formed in the inner intermediate land part. This can suppress rigidity reduction of the center land part, and therefore can further improve the operation stability in straight driving.

A sipe of the inner intermediate land part may have a first sipe part positioned on a vehicle installation inner side, and a second sipe part communicating with the first sipe part and positioned on a vehicle installation outer side than the first sipe part, and a sipe angle of the first sipe part may be larger than a sipe angle of the second sipe part. This further disperses the register of noise, and therefore further improves the quietness.

A groove width of an outer shoulder main groove, which divides an outer shoulder land part constituting a vehicle mounting outer part of the shoulder land parts and the outer intermediate land part, of the main grooves may be smaller than a groove width of an outer center main groove, which divides the outer intermediate land part and the center land part. The air-column tube resonance sound pressure of the main groove can be suppressed by forming the main groove thin, the main groove dividing the outer intermediate land part and the outer shoulder land part, which contributes largely to pass-by noise. This can further improve the quietness.

A groove width of an inner shoulder main groove, which divides an inner shoulder land part constituting a vehicle installation inner part of the shoulder land parts and the inner intermediate land part, of the main grooves may be smaller than a groove width of an inner center main groove, which divides the inner intermediate land part and the center land part. This can further improve the quietness while improving the operation stability.

Each of all of the plurality of block parts may be chamfered from a wheel tread side at an acute angle part at least viewed from a wheel tread, and an area of a chamfered surface of the center land part may be smaller than an area of a chamfered surface of the intermediate land parts and the shoulder land parts when a chamfered surface formed by chamfering is viewed from a wheel tread. This can suppress rigidity reduction of the center land part, and therefore can further improve the operation stability in straight driving.

[DELETED]

Brief Description of Drawings

Fig. 1 is a plane view describing a tread pattern of a pneumatic tire according to an embodiment of the present invention.

Fig. 2 is a partial enlarged view of Fig. 1.

Fig. 3 is a plane view showing a tread pattern of example 1 used in Experimental Example.

Fig. 4 is a plane view showing a tread pattern of example 2 used in Experimental Example.

Fig. 5 is a plane view showing a tread pattern of example 3 used in Experimental Example.

Fig. 6 is a plane view showing a tread pattern of example 4 used in Experimental Example.

Fig. 7 is a plane view showing a tread pattern of example 6 used in Experimental Example.

Fig. 8 is a plane view showing a tread pattern of example 7 used in Experimental Example.

Fig. 9 is a plane view showing a tread pattern of comparative example 1 used in Experimental Example.

Fig. 10 is a plane view showing a tread pattern of comparative example 2 used in Experimental Example.

Fig. 11 is a plane view showing a tread pattern of comparative example 3 used in Experimental Example.

Fig. 12 is a plane view showing a tread pattern of comparative example 4 used in Experimental Example.

Fig. 13 is a schematic plane view showing a variation of a sipe in a pneumatic tire according to the embodiment of the present invention.

Fig. 14 is a schematic plane view showing another variation of a sipe in a pneumatic tire according to the embodiment of the present invention.

Fig. 15 is a schematic plane view showing still another variation of a sipe in a pneumatic tire according to the embodiment of the present invention.

Fig. 16 is a plane view showing a variation of a tread pattern in a pneumatic tire according to the embodiment of the present invention.

Description of Embodiments

The following description will explain an embodiment of the present invention with reference to the appended drawings. It is to be noted that identical or similar signs are attached to identical or similar parts in the following description on the drawings.

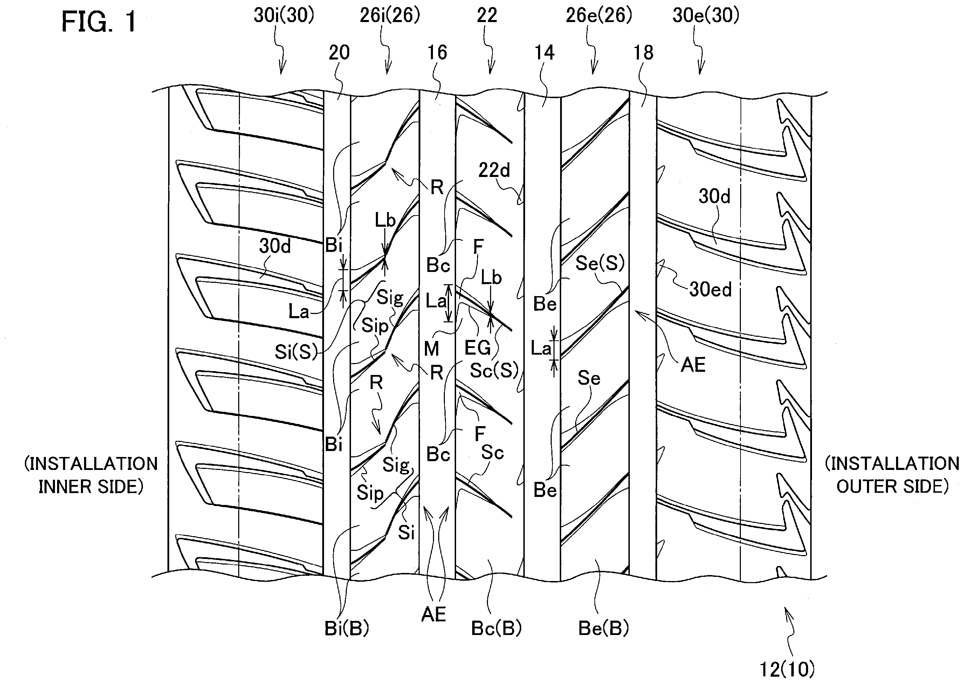

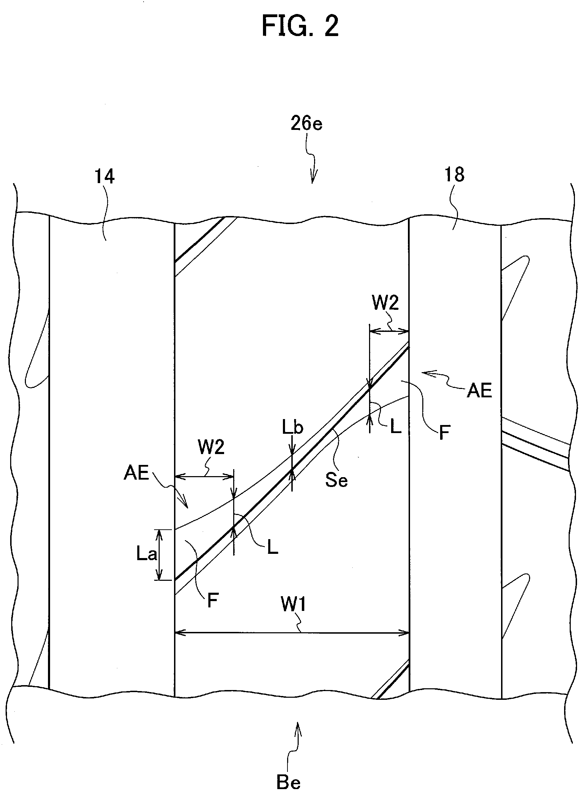

Fig. 1 is a plan view for explaining a tread pattern of a pneumatic tire according to one embodiment (which will be hereinafter referred to as the present embodiment) of the present invention. Fig. 2 is a partial enlarged view of Fig. 1. A pneumatic tire 10 of the present embodiment is provided with a belt layer on the tire radial outer side of a carcass ply, and a tread part 12 on the tire radial outer side of the belt layer.

The tread part 12 is partitioned by four main grooves 14, 16, 18, 20, which extend in the tire circumferential direction, into a center land part 22, intermediate land parts 26 respectively adjoining both sides of the center land part 22, and shoulder land parts 30 respectively adjoining the tire transversal outer sides of the intermediate land parts 26. In the present embodiment, each main groove is formed as a straight groove which extends linearly along the tire circumferential direction. Such a straight groove can smoothly drain a water film, which is interposed between the road surface and the tread grounded surface, to the outside in straight driving and in cornering, and can improve the drainage performance. In the present embodiment, the intermediate land parts 26 are composed of an outer intermediate land part 26e adjoining the vehicle installation outer side of the center land part 22, and an inner intermediate land part 26i adjoining the vehicle installation inner side of the center land part 22, and the shoulder land parts 30 are composed of an outer shoulder land part 30e adjoining the vehicle installation outer side of the outer intermediate land part 26e, and an inner shoulder land part 30i adjoining the vehicle installation inner side of the inner intermediate land part 26i.

The wheel tread side of the center land part 22 and the intermediate land parts 26 is sectioned in the tire circumferential direction only by sipes S (microgrooves each having a width equal to or smaller than 1.2 mm), so that block parts B are arrayed along the tire circumferential direction. The block parts B are composed of block parts Bc arrayed in the center land part 22, block parts Be arrayed in the outer intermediate land part 26e, and block parts Bi arrayed in the inner intermediate land part 26i.

Here, a block part in the present application is a concept including not only a block (e.g., block parts Be arrayed in the outer intermediate land part 26e, and block parts Bi arrayed in the inner intermediate land part 26i) having whole circumference defined by grooves and sipes with both ends of sipes opening to main grooves, but also a block (e.g., block parts Bc arrayed in the center land part 22) projected from a rib.

All block parts B (Bc, Be, Bi) formed by sectioning by the sipes S are chamfered from the wheel tread side at an acute angle part AE viewed from the wheel tread. Regarding each block part B, a chamfering width La at a tire transversal end part is larger than a chamfering width Lb at a middle part as illustrated in Figs. 1 and 2. It is to be noted that a chamfering width in the present application means a tire circumferential distance between a sipe S and a chamfering starting point.

Each sipe Sc, which is formed in the center land part 22, of the sipes S communicates with a main groove 16 only on the vehicle installation inner side.

In addition, the center land part 22 has a chamfering width larger than that of the intermediate land parts 26 and the shoulder land parts 30. Furthermore, an edge EG, which is line of intersection of a chamfered surface F and a wheel tread M, has an inverted U shape with respect to the wheel tread M, that is, a curved concave shape with respect to the wheel tread M (curved convex shape with respect to the chamfered surface F). As a result, an area from each sipe Sc to the main groove 16 is continuously chamfered so as to cover the acute angle part AE, that is, so as to effectively prevent curl-up deformation of the acute angle part AE by forming the chamfered surface F at the acute angle part AE. The chamfered surface F may be planar, or may have a curved convex plane shape.

In the present embodiment, the outer intermediate land part 26e is similarly chamfered by sipes Se, and the inner intermediate land part 26i is similarly chamfered by sipes Si.

In the present embodiment, two arc-shaped sipe parts Sip, Sig having convex directions opposite to each other form a bend shape (bend part R) at each sipe of the inner intermediate land part 26i constituting the intermediate land parts 26.

Moreover, a difference between the chamfering width of the acute angle part AE, which is formed by each sipe Se of the outer intermediate land part 26e, and a chamfering width L, which is calculated from the following equation, is set equal to or smaller than 10% of L as illustrated in Fig. 2. Regarding the sipes Sc, Si, it is to be noted that a difference from a chamfering width L calculated from the following equation may also be similarly set equal to or smaller than 10% of L.

$$L = 6(W2/W1)^2 - 11(W2/W1) + 5.3$$

Equation (1)

W1: Width of Land Part (mm)
W2: Transversal Distance from Main Groove (mm)
L: Chamfering Width (Circumferential Distance between Sipe and Chamfering Starting Point) (mm)

In the present embodiment, a notch 22d is formed on the outer intermediate land part 26e side of the center land part 22 at a position on extended line of each sipe Se formed in the outer intermediate land part 26e, and a notch 30ed is formed on the outer intermediate land part 26e side of the outer shoulder land part 30e at a position on extended line of each sipe Se.

Furthermore, in the present embodiment, an edge part of each transversal groove 30d of the shoulder land parts 30 is also chamfered. Each transversal groove 30d has a groove width which becomes smaller in an area close to a main groove with which the transversal groove 30d communicates.

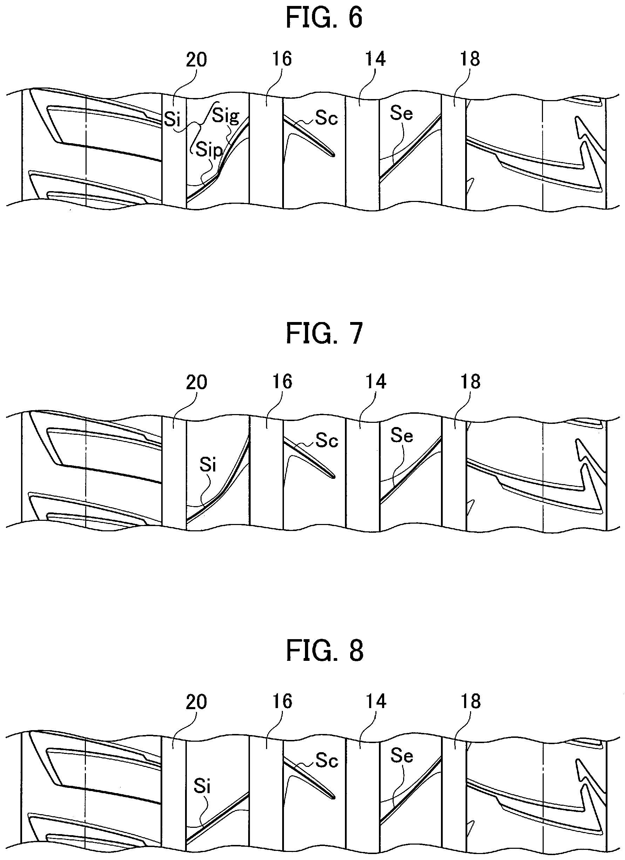

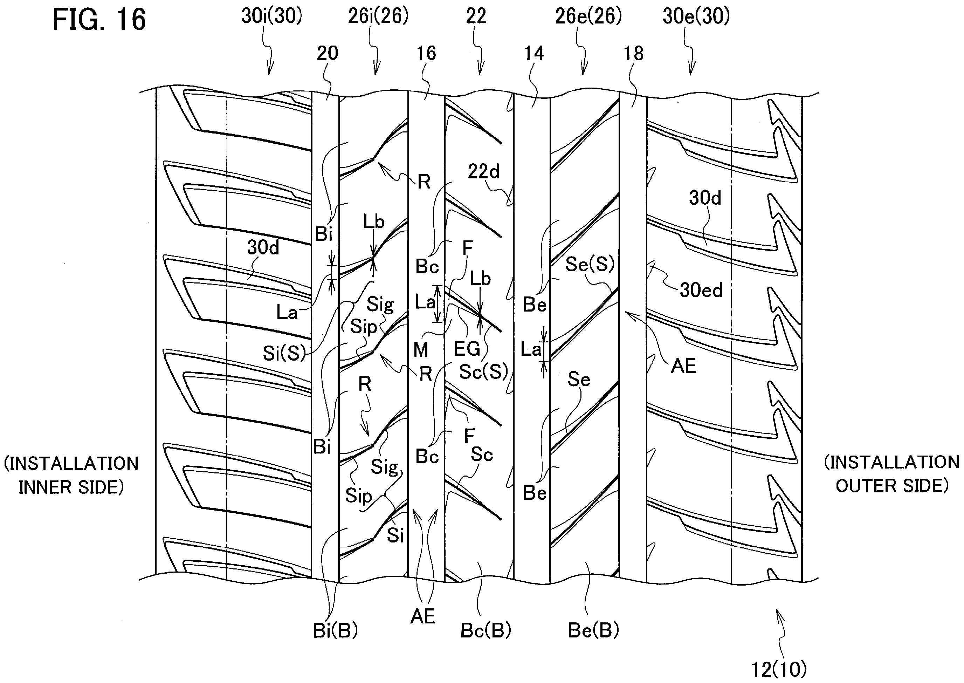

Moreover, in the present embodiment, the mean angle of the sipes Se of the outer intermediate land part 26e is smaller than the mean angle of the sipes Sc of the center land part 22 and the sipes Si of the inner intermediate land part 26i as illustrated in Figs. 8 and 16. It is to be noted that a sipe angle means an angle of straight line, which connects both tire transversal ends of a sipe or a sipe part, to the tire circumferential direction. In addition, a sipe mean angle shall mean the simple average of sipe angles over the tire circumferential direction.

The mean angles of the sipes S (Sc, Se, Si) are different from each other between a plurality of land parts (22, 26e, 26i).

In the present embodiment, the mean angle of the sipes Sc of the center land part 22 is formed larger than the mean angle of the sipes Si of the inner intermediate land part 26i. In addition, an inclination direction of the sipes Sc of the center land part 22 against the tire circumferential direction is different from that of the sipes Se, Si of the intermediate land parts 26.

In the present embodiment, each sipe Si of the inner intermediate land part 26i has: a first sipe part, which is positioned on the tire transversal outer side and opens to the main groove 20; and a second sipe part, which has one end communicating with the first sipe part and being positioned on the tire transversal outer side than the first sipe part and the other end opening to the main groove 16. In addition, the sipe angle of the first sipe part and the sipe angle of the second sipe part are formed to be different from each other. In the present embodiment, the sipe angle of the first sipe part is larger than the sipe angle of the second sipe part.

Moreover, regarding the main grooves, an outer shoulder main groove 18, which divides the outer shoulder land part 30e constituting a vehicle installation outer part of the shoulder land parts 30 and the outer intermediate land part 26e, is formed to have a groove width smaller than that of an outer center main groove 14, which divides the outer intermediate land part 26e and the center land part 22. In addition, an inner shoulder main groove 20, which divides an inner shoulder land part 30i constituting a vehicle installation inner part of the shoulder land parts 30 and the inner intermediate land part 26i, is formed to have a groove width smaller than that of an inner center main groove 16, which divides the inner intermediate land part 26i and the center land part 22.

Moreover, in the present embodiment, the area of the chamfered surface F of the center land part 22 is smaller than the area of the chamfered surface of the intermediate land parts 26 and the shoulder land parts 30 when a chamfered surface formed by chamfering is viewed from the wheel tread M.

Furthermore, in the present embodiment, the groove area ratio of the tire transversal inner side of a plurality of land parts 22, 26, 30 and the groove area ratio of the tire transversal outer side are arranged to be equal to each other with respect to the tire equatorial plane.

(Function, Effect)

The following description will explain the function and effect of the present embodiment.

In the pneumatic tire 10 of the present embodiment, the wheel tread side of the center land part 22 and the intermediate land parts 26 formed by four main grooves 14, 16, 18, 20 formed in the tread part 12 is sectioned in the tire circumferential direction only by sipes S, so that block parts B (Bc, Be, Bi) are formed along the tire circumferential direction. In addition, all block parts B are chamfered at the acute angle parts AE viewed from the wheel tread. Moreover, an edge part of each transversal groove 30d of the shoulder land parts 30 is also chamfered.

Such chamfering improves the grounding performance. Accordingly, even when large force acts on the tread part in cornering or in braking, or even when a block end (especially a block end of the acute angle part AE) on the wheel tread side of the tread part is deformed and caught in a space between the tire and the road surface, reduction of the grounding performance around the caught part is suppressed. It is therefore possible to improve the operation stability especially in cornering and the braking characteristics, while maintaining the water film removal performance.

It is to be noted that drainage efficiency in a broad sense is obtained by broadening drainage efficiency in a narrow sense (performance of draining water from wheel tread through grooves on road surface having a large water depth, which will be performance of suppressing so-called hydroplaning) to a concept including water film removal performance. Water film removal performance means performance of removing a water film on road surface having a small water depth by an edge such as a sipe. When a water film exists on road surface, a friction coefficient between a tire and the road surface becomes small. In other words, a friction coefficient between the tire and the road surface is recovered to a normal value by removing the water film, and therefore operation stability or a braking characteristic is improved.

In the present embodiment, regarding each block part B, a chamfering width La at a tire transversal end part is larger than a chamfering width Lb at a middle part. Accordingly, although the grounding pressure at a middle part of each block part is higher than that of the tire transversal end part, the grounding area can be increased by a difference of a chamfering width, and therefore the operation stability is further improved. It is to be noted that, when a block end having a chamfering width La at a tire transversal end part larger than a chamfering width Lb at a middle part is a block end on the acute angle part AE side, curl-up deformation of the acute angle part AE can be prevented more reliably, and therefore the braking characteristics can be further improved.

Moreover, the sipes Sc, which are formed in the center land part 22, of the sipes S communicate with the main groove 16 only on the vehicle installation inner side. Accordingly, in the center land part 22, rigidity of a vehicle installation outer part is higher than that of a vehicle installation inner part. Large lateral force acts on the tread part 12 from the vehicle installation outer side toward the vehicle installation inner side in cornering, and this contributes largely to the operation stability. Moreover, drainage efficiency can be ensured since any sipe Sc does not terminate in the center land part 22.

In addition, the chamfering width of the center land part 22 is larger than that of the intermediate land parts 26

and the shoulder land parts 30, and an area between each sipe Sc and the main groove 16 is chamfered so that curl-up deformation of the acute angle part AE can be prevented by forming a chamfered surface F at the acute angle part AE.

Since the grounding length of the center land part 22 is larger than that of the other land parts, larger force is applied to the center land part 22. Therefore, a chamfering width of the center land part 22 is made larger than that of the other land parts in order to prevent the acute angle part AE from being caught, and an edge EG, which is a portion of line of intersection of the chamfered surface F and the wheel tread M, is chamfered to have an inverted U shape with respect to the wheel tread M so as to widely cover the acute angle part AE. This provides an effect of preventing curl-up deformation of the acute angle part AE more reliably. Furthermore, this chamfering also can achieve improvement of an appearance characteristic.

Moreover, regarding the sipes of the inner intermediate land part 26i constituting the intermediate land parts 26, two arc-shaped sipe parts Sip, Sig having convex directions opposite to each other are formed continuously, so that a bend part R is formed.

This displaces a chamfered part (chamfered portion) in the tire circumferential direction with respect to the center land part 22 or the inner intermediate land part 26i. Accordingly, the chamfered part is grounded at deviated timing during tire rotation, and therefore improves quietness. It is to be noted that the phase of the chamfered part is deviated in the tire circumferential direction even when a simple linear sipe is arranged at a large angle to the tire transversal direction, though a part of a sipe which communicates with a main groove becomes a considerably acute angle in such a case. Therefore, the block rigidity lowers (especially rigidity in transversal direction becomes low), and the operation stability in cornering tends to deteriorate.

Moreover, since the above equation (1) is satisfied, a block end (especially an acute angle part) is prevented from being deformed and caught and the grounding performance around a caught part is prevented from lowering further effectively, and the operation stability or braking characteristics is further improved.

Moreover, each transversal groove 30d of the shoulder land parts 30 communicates with a main groove with the groove width thereof becoming small in an area close to the main groove with which the transversal groove 30d communicates. Since the shoulder land parts 30 are land parts where the grounding pressure becomes large in cornering, the rigidity of the shoulder land parts 30 is preferably made higher than that of the other land parts. On the other hand, it is necessary to ensure a groove width from the perspective of drainage efficiency. In the present embodiment, drainage efficiency can be ensured by configuring each transversal groove 30d to have a groove width becoming larger toward a grounded end, while the rigidity of the shoulder land parts 30 is ensured by configuring each transversal groove 30d to have a groove width becoming small in an area close to a main groove with which the transversal groove 30d communicates.

Moreover, regarding the pneumatic tire 10 according to the present invention, the wheel tread side of the center land part 22 and the intermediate land parts 26 formed by four main grooves 14, 16, 18, 20 formed in the tread part 12 is sectioned in the tire circumferential direction only by sipes S, so that the pneumatic tire 10 has an asymmetric pattern wherein block parts B (Bc, Be, Bi) are formed along the tire circumferential direction. In addition, regarding a plurality of land parts, each sipe Se of the outer intermediate land part 26e has both ends respectively opening to the main grooves 14, 18, the mean angle of the sipes Se of the outer intermediate land part 26e is smaller than the mean angle of the sipes Sc of the center land part 22 and the mean angle of the sipes Si of the inner intermediate land part 26i, and the sipes Sc formed in the center land part 22 communicate with the main groove 16 only on the vehicle installation inner side.

As described above, since the sipes Sc formed in the center land part 22 do not open to the main groove 14 adjoining the center land part 22 on the vehicle installation outer side, it is possible to achieve both of: improvement of a quietness by suppressing noise generation such as sound due to impact in grounding of the sipes Sc with the road surface and vibration of a tire due to impact input; and improvement of operation stability in straight driving by suppressing rigidity reduction at the center land part 22 due to formation of the sipes Sc. Furthermore, the quietness can be obtained since the mean angle of the sipes Se of the outer intermediate land part 26e, which contributes largely to pass-by noise, gets close to the tire circumferential direction.

The mean angles of the sipes S may be different from each other between a plurality of land parts 22, 26, 30. This feature makes responses to input in cornering differ between sipes, and therefore disperses the register of noise. This can further improve the quietness.

Furthermore, the mean angle of the sipes Si of the center land part 22 may be larger than the mean angle of the sipes Si of the inner intermediate land part 26i. This can suppress rigidity reduction of the center land part 22, and therefore can further improve the operation stability in straight driving.

Each sipe Si of the inner intermediate land part 26i has a first sipe part Sip positioned on the vehicle installation inner side, and a second sipe part Sig which communicates with the first sipe part Sip and is positioned on the vehicle installation outer side than the first sipe part Sip, and the sipe angle of the first sipe part Sip may be larger than the sipe angle of the second sipe part Sig. This further disperses the register of noise, and therefore further improves the quietness.

Regarding the main grooves, the groove width of the outer shoulder main groove 18, which divides the outer shoulder land part 30e constituting a vehicle installation outer part of the shoulder land part 30 and the outer intermediate land part 26e, may be smaller than that of the outer center main groove 14, which divides the outer intermediate land part 26e and the center land part 22. The air-column tube resonance sound pressure of the main groove 18 can be suppressed by forming the main groove 18 thin, the main groove 18 dividing the outer intermediate land part 26e and the outer shoulder land part 30e, which contributes largely to pass-by noise. This can further improve the quietness.

Regarding the main grooves, the groove width of the inner shoulder main groove 20, which divides the inner shoulder land part 30i constituting a vehicle installation inner part of the shoulder land part 30 and the inner intermediate land part 26i, may be smaller than that of the inner center main groove 16, which divides the inner intermediate land part 26i and the center land part 22. This can further improve the quietness while improving the operation stability.

Each of all of a plurality of block parts B (Bc, Be, Bi) is chamfered from the wheel tread side at an acute angle part AE at least viewed from the wheel tread M, and the area of the chamfered surface F of the center land part 22 may be smaller than the area of the chamfered surface of the intermediate land parts 26 and the shoulder land parts 30 when a chamfered surface formed by chamfering is viewed from the wheel tread M. This can suppress rigidity reduction of the center land part 22, and therefore can further improve the operation stability in straight driving.

A plurality of land parts 22, 26, 30 may be arranged so that the groove area ratio on the tire transversal inner side thereof and the groove area ratio on the tire transversal outer side thereof become equal to each other with respect to the tire equatorial plane. This equalizes the grounding pressure at the land parts, suppresses uneven abrasion, and can improve abrasion resistance.

Examples

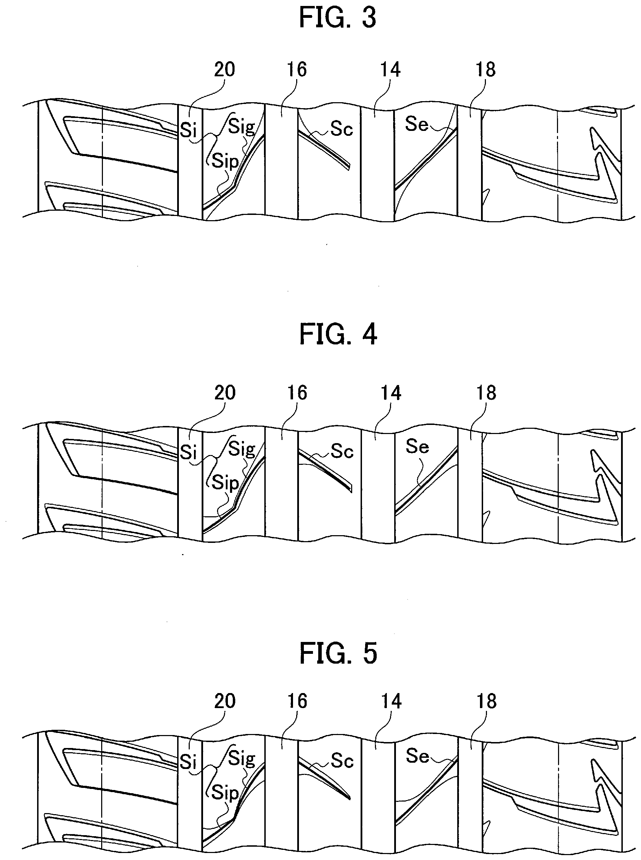

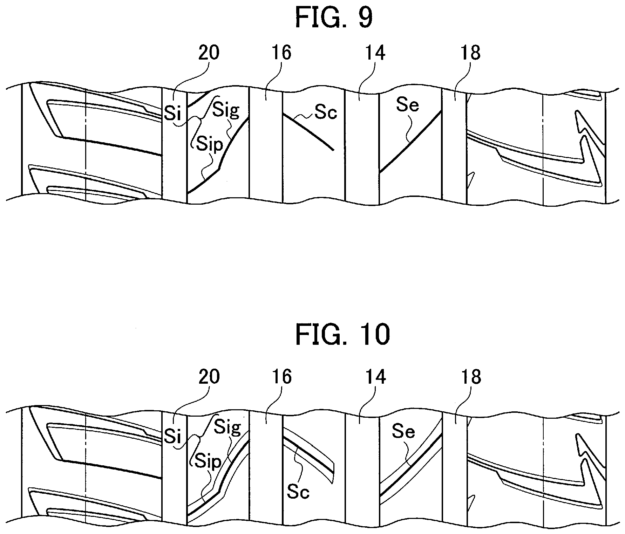

The present inventors used Examples 1 to 7 (Ex. 1 to Ex. 7; see Figs. 3 to 8) as a pneumatic tire 10 of the above embodiment and variations thereof, and Comparative Examples 1 to 4 (Com. Ex. 1 to Com. Ex. 4; see Figs. 9 to 12) as a pneumatic tire for comparison to make performance evaluation regarding operation stability, a braking characteristics and a noise characteristics by running tests.

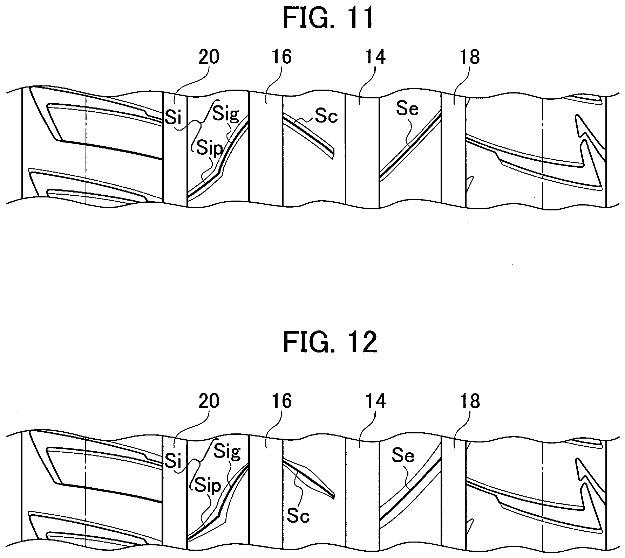

Here, Fig. 3 is a plan view illustrating a tread pattern of Example 1, Fig. 4 is a plan view illustrating a tread pattern of Example 2, Fig. 5 is a plan view illustrating a tread pattern of Example 3, Fig. 6 is a plan view illustrating a tread pattern of Example 4, Fig. 7 is a plan view illustrating a tread pattern of Example 6, Fig. 8 is a plan view illustrating a tread pattern of Example 7, Fig. 9 is a plan view illustrating a tread pattern, which is not chamfered, of Comparative Example 1 (tire similar to conventional example), Fig. 10 is a plan view illustrating a tread pattern, which has a constant chamfering width, of Comparative Example 2, Fig. 11 is a plan view illustrating a tread pattern, which has a chamfering width smaller than that of Comparative Example 2, of Comparative Example 3, and Fig. 12 is a plan view illustrating a tread pattern, which has a chamfering width that is larger at a middle part of a block than at a block end part, of Comparative Example 4.

Between Examples 1 to 3, the shapes of the outer intermediate land parts 26e are different from each other. Example 1 is an example wherein a chamfering width becomes larger as the distance from the block end becomes smaller at a tire transversal end part where an angle formed by a main groove and a sipe Se is an obtuse angle viewed from the wheel tread of the block part. Example 2 is an example wherein a chamfering width becomes larger as a distance from the block end becomes smaller at a tire transversal end part where an angle formed by a main groove and a sipe is an acute angle viewed from the wheel tread of a block part at an area between the sipe Se and one side (lower side on the paper surface of the sipe Se in Fig. 4), and a chamfering width is substantially constant at an area between the sipe Se and the other side (upper side on the paper surface of the sipe Se in Fig. 4). Example 3 is an example wherein a chamfering width becomes larger as a distance from the block end becomes smaller at a tire transversal end part where an angle formed by a main groove and a sipe is an acute angle viewed from the wheel tread of a block part, on both sides of the sipe Se.

Example 4 is an example wherein a chamfering width (distance in the tire circumferential direction between sipe Sc and chamfering starting point) becomes larger as the distance from a block end becomes smaller at a tire transversal end part where an angle formed by a main groove and a sipe is an acute angle viewed from the wheel tread of a block part in the center land part 22 in contrast to Example 3.

Example 5 is an example wherein both ends of a sipe Sc of the center land part 22 respectively open to main grooves in contrast to Example 4.

Example 6 is an example wherein a sipe Si of the inner intermediate land part 26i does not have a bend shape of two arcs but has a bend shape of one arc. Example 7 is an example wherein a sipe Si of the inner intermediate land part 26i does not have a bend shape of two arcs but has one linear shape.

Tire conditions and evaluation results are shown collectively in Table 1. It is to be noted that the common following conditions are used as the tire size, rim width and tire internal pressure for all examples.

Tire Size: 225/45R17

Rim Width: 7.5 J
Internal Pressure: 220 kPa

[Table 1]

| | | | Unit | Com. Ex. 1 | Com. Ex. 2 | Com. Ex. 3 | Com. Ex. 4 | Ex. 1 | Ex. 2 | Ex. 3 | Ex. 4 | Ex. 5 | Ex. 6 | Ex. 7 |
|---|---|---|---|---|---|---|---|---|---|---|---|---|---|---|
| Chamfered Width in Outer Intermediate Land Part: Length from Sipe in Tire Circumferential Direction | One Side from Sipe (Lower Side in Figure) | Installation Inner Side | mm | 0 | 5 | 1 | 1 | 5 | 0.8 | 0.7 | 0.7 | 0.7 | 0.7 | 0.7 |
| | | Middle Part | mm | 0 | 5 | 1 | 5 | 1 | 1 | 1 | 1 | 1 | 1 | 1 |
| | | Installation Outer Side (Acute Angle Part) | mm | 0 | 5 | 1 | 1 | 0.8 | 5 | 4.4 | 4.4 | 4.4 | 4.4 | 4.4 |
| | Other Side from Sipe (Upper Side in Figure) | Installation Inner Side (Acute Angle Part) | | 0 | 5 | 1 | 1 | 0.7 | 1 | 5 | 5 | 5 | 5 | 5 |
| | | Middle Part | mm | 0 | 5 | 1 | 5 | 1 | 1 | 1 | 1 | 1 | 1 | 1 |
| | | Installation Outer Side | mm | 0 | 5 | 1 | 1 | 5 | 1 | 0.8 | 0.8 | 0.8 | 0.8 | 0.8 |
| | | Chamfered Width: Maximum Difference between Measured Value and Calculated Value of Equation (1) | % | | | | | 40 | 20 | 10 | 0 | 0 | 0 | 0 |
| Sipe in Center Land Part: Only Installation Inner Side Communicates with Circumferential Main Groove | | | | ○ | ○ | ○ | ○ | ○ | ○ | ○ | ○ | × | ○ | ○ |
| Chamfered of Center Land Part: Chamfered from Sipe to Circumferential Main Groove | | | | × | ○ | ○ | ○ | ○ | ○ | ○ | ○ | ○ | ○ | ○ |
| Sipe in Installation Inner Side Land Part: Two Arcs Arranged in Bend Shape | | | | ○ | ○ | ○ | ○ | ○ | ○ | ○ | ○ | ○ | × | × |

(continued)

| | | Unit | Com. Ex. 1 | Com. Ex. 2 | Com. Ex. 3 | Com. Ex. 4 | Ex. 1 | Ex. 2 | Ex. 3 | Ex. 4 | Ex. 5 | Ex. 6 | Ex. 7 |
|---|---|---|---|---|---|---|---|---|---|---|---|---|---|
| Grounding Area on Smooth Surface | | - | 100 | 95 | 98 | 97 | 98 | 98 | 98 | 98 | 98 | 98 | 98 |
| Performance | Operation Stability | - | 100 | 90 | 95 | 95 | 103 | 110 | 115 | 120 | 110 | 115 | 105 |
| | Braking Characteristics | - | 100 | 102 | 101 | 90 | 102 | 110 | 110 | 110 | 110 | 110 | 110 |
| | Noise Characteristics | - | 100 | 100 | 100 | 100 | 100 | 100 | 100 | 100 | 100 | 100 | 95 |
| Comprehensive Evaluation | | | × | × | × | × | Δ | ○ | ◎ | ◎◎ | Δ | Δ | Δ |
| Remarks | | | Large Curl-Up during Braking | Small Contact Area; Low Grip | Large Curl-Up during Braking | No Merit | Merit Small | | | BEST | Cornering Performance Lower than the BEST | Slightly Lower Cornering Performance by Curl-Up | Phase at Impact become Closer; Noise Characteristics Slightly Deteriorate |

In an evaluation method of steerability, each example was installed to a front wheel drive vehicle having a displacement of 2,000 cc, the vehicle was run on a steerability evaluation road (dry normal road) of a test course with only one person getting in the car, and the operation stability was indexed from sensory evaluation (feeling evaluation) by the test driver. In indexing of operation stability, the evaluation index of Comparative Example 1 (conventional example) wherein an end part formed by a sipe was not chamfered was expressed as 100, and a relative index was found as an evaluation index for each tire. An evaluation index having a larger value indicates that the operation stability is more preferable.

As seen from Table 1, the operation stability of Examples 1 to 7 showed more preferable evaluation results than that of Comparative Example 1.

In an evaluation method of a braking characteristic, each example was installed to a front wheel drive vehicle having a displacement of 2,000 cc, and a braking distance from speed per hour 80 km/h to stop on dry road surface was measured. In addition, the evaluation index of the braking distance of Comparative Example 1 was expressed as 100, and a relative index was found as an evaluation index for each tire. An evaluation index having a larger value indicates that the braking distance is shorter, that is, the braking characteristic is more preferable.

As seen from Table 1, the braking characteristics of Examples 1 to 7 showed more preferable evaluation results than that of Comparative Example 1.

In an evaluation method of a noise characteristic, each example was run on an indoor drum test machine at speed per unit of 80 km/h, and tire lateral sound during this run was measured and evaluated using conditions set in JASO C606 standard. In addition, the noise characteristic of Comparative Example 1 (conventional example) was expressed as 100, and a relative index was found as an evaluation index for each tire. An evaluation index having a larger value indicates that the quietness is better.

As seen from Table 1, the noise characteristic (quietness) of Examples 1 to 6 showed evaluation results equivalent to that of Comparative Example 1.

Moreover, as comprehensive evaluation, Example 4 showed the best result, Example 3 showed the second result, and Example 2 showed the third result. In addition, Examples 1 and 5 to 7 showed results next to Example 2. It is to be noted that Examples 5 and 6 showed results next to Example 2 since the cornering performance of Examples 5 and 6 are slightly lower than that of Examples 2 and 3.

Although the above description has explained an embodiment of the present invention using illustrative embodiments and experimental examples, these are illustrations for embodying the technical idea of the present invention, and the embodiment of the present invention can be modified in various ways without departing from the scope of the present invention as defined in the appended claims.

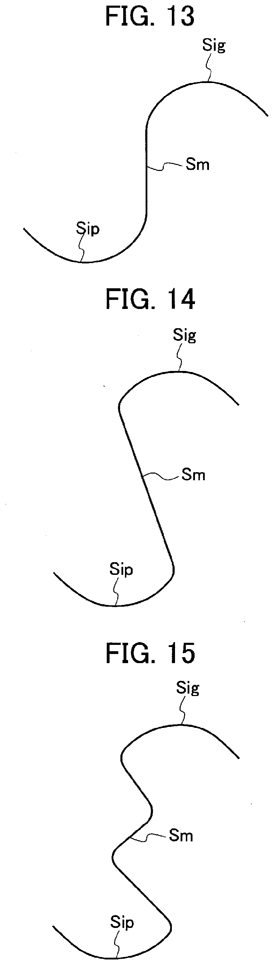

For example, a bend shape part formed of two arc-shaped sipe parts Sip, Sig having convex directions opposite to each other may be formed as the sipe Si of the inner intermediate land part 26i as illustrated in Fig. 13.

In such a case, a linear sipe part Sm, which connects the sipe parts Sip, Sig so that the tire transversal outer ends of the sipe parts Sip, Sig respectively terminate in blocks, may be formed along the tire circumferential direction. Moreover, the sipe part Sm may be inclined against the tire circumferential direction as illustrated in Fig. 14. Furthermore, the sipe part Sm may have a wavelike shape (or cranklike shape) as illustrated in Fig. 15.

Industrial Applicability

The aspect of the present invention provides a pneumatic tire which can improve operation stability while maintaining water film removal performance.

Reference Signs List

| 10 | PNEUMATIC TIRE |
|----|----------------|
| 12 | TREAD PART |
| 14 | MAIN GROOVE |
| 16 | MAIN GROOVE |
| 18 | MAIN GROOVE |
| 20 | MAIN GROOVE |
| 22 | CENTER LAND PART |
| 26 | INTERMEDIATE LAND PART |
| 26i | INNER INTERMEDIATE LAND PART |
| 26e | OUTER SHOULDER LAND PART |
| 30 | SHOULDER LAND PART |

| EG | EDGE |
| --- | --- |
| F | CHAMFERED SURFACE |
| M | WHEEL TREAD |
| S | SIPE |
| Sc | SIPE |
| Se | SIPE |
| Si | SIPE |
| B | BLOCK PART |
| Bc | BLOCK PART |
| Be | BLOCK PART |
| Bi | BLOCK PART |
| AE | ACUTE ANGLE PART |
| L | CHAMFERING WIDTH |
| La | CHAMFERING WIDTH |
| Lb | CHAMFERING WIDTH |
| Sip | SIPE PART |
| Sig | SIPE PART |
| W1 | WIDTH OF LAND PART |
| W2 | TRANSVERSAL DISTANCE FROM MAIN GROOVE |

**Claims**

1.  A pneumatic tire (10) of an asymmetric pattern having a plurality of land parts (22, 26, 30) partitioned by four main grooves (14, 16, 18, 20) extending in a tire circumferential direction, in a tread part (12), wherein
    the plurality of land parts (22, 26, 30) include:

    a center land part (22);
    intermediate land parts (26) respectively adjoining both sides of the center land part (22); and
    shoulder land parts (30) respectively adjoining tire transversal outer sides of the intermediate land parts (26),

    the center land part (22) and the intermediate land parts (26) has a plurality of block parts (B) having outer sides in a tire radial direction sectioned in a tire circumferential direction only by sipes (S),
    a sipe (Sc) formed in the center land part (22) communicates with a main groove (16) only on a vehicle installation inner side,
    **characterised in that**
    both ends of a sipe (Se) of an outer intermediate land part (26e) constituting a vehicle installation outer part of the intermediate land parts (26) respectively open to main grooves (14, 18),
    an angle of a sipe (Se) of the outer intermediate land part (26e) is smaller than an angle of a sipe (Sc) of the center land part (22) and a sipe (Si) of an inner intermediate land part (26i) constituting a vehicle installation inner part of the intermediate land parts (26), and "angle of a sipe" means an angle of straight line, which connects both tire transversal ends of a sipe, to the tire circumferential direction, and
    wherein "block part" is a concept including not only a block (Bi, Be) having whole circumference defined by grooves (20, 16, 14, 18) and sipes (Si, Se) with both ends of sipes opening to main grooves, but also a block (Bc) projected from a rib.

2.  The pneumatic tire (10) according to claim 1, wherein mean angles of sipes (S) are different from each other between the plurality of land parts (22, 26, 30), and "mean angles of sipes" means the simple average of sipe angles over the tire circumferential direction.

3.  The pneumatic tire (10) according to claim 2, wherein an angle of a sipe (Sc) formed in the center land part (22) is larger than an angle of a sipe (Si) formed in the inner intermediate land part (26i).

4.  The pneumatic tire (10) according to any one of claims 1 to 3, wherein
    a sipe (Si) of the inner intermediate land part (26i) has:

    a first sipe part (Sip) positioned on a vehicle installation inner side; and
    a second sipe part (Sig) communicating with the first sipe part (Sip) and positioned on a vehicle installation outer side than the first sipe part (Sip), and

a sipe angle of the first sipe part (Sip) is larger than a sipe angle of the second sipe part (Sig), and "sipe angle" means an angle of straight line, which connects both tire transversal ends of a sipe part, to the tire circumferential direction.

5. The pneumatic tire (10) according to any one of claims 1 to 4, wherein a groove width of an outer shoulder main groove (18), which divides an outer shoulder land part (30e) constituting a vehicle mounting outer part of the shoulder land parts (30) and the outer intermediate land part (26e), of the main grooves (14, 16, 18, 20) is smaller than a groove width of an outer center main groove (14), which divides the outer intermediate land part (26e) and the center land part (22).

6. The pneumatic tire (10) according to any one of claims 1 to 5, wherein a groove width of an inner shoulder main groove (20), which divides an inner shoulder land part (30i) constituting a vehicle installation inner part of the shoulder land parts (30) and the inner intermediate land part (26i), of the main grooves (14, 16, 18, 20) is smaller than a groove width of an inner center main groove (16), which divides the inner intermediate land part (26i) and the center land part (22).

7. The pneumatic tire (10) according to any one of claims 1 to 6, wherein
each of all of the plurality of block parts (B) is chamfered from an outer side in a tire radial direction at an acute angle part at least viewed from an outer side in a tire radial direction, and
an area of a chamfered surface of the center land part (22) is smaller than an area of a chamfered surface of the intermediate land parts (26) and the shoulder land parts (30) when a chamfered surface formed by chamfering is viewed from an outer side in a tire radial direction.


**Patentansprüche**

1. Luftreifen (10)mit einem asymmetrischen Profil, das mehrere Stegteile (22, 26, 30), die durch vier Hauptrillen (14, 16, 18, 20), die sich in einer Reifenumfangsrichtung erstrecken, geteilt werden, in einem Laufflächenteil (12) aufweist, wobei
die mehreren Stegteile (22, 26, 30) Folgendes umfassen:

   einen Mittenstegteil (22),
   Zwischenstegteile (26), die sich jeweils an beide Seiten des Mittenstegteils (22) anschließen, und
   Schulterstegteile (30), die sich jeweils an in Reifenquerrichtung äußere Seiten der Zwischenstegteile (26) anschließen,
   wobei der Mittenstegteil (22) und die Zwischenstegteile (26) mehrere Blockteile (B) aufweisen, die in einer Reifenradialrichtung äußere Seiten aufweisen, die in einer Reifenumfangsrichtung nur durch Lamellen (S) unterteilt sind,
   eine Lamelle (Sc), die in dem Mittenstegteil (22) gebildet ist, nur auf einer bei Fahrzeuginstallation inneren Seite mit einer Hauptrille (16) verbunden ist,
   **dadurch gekennzeichnet, dass**
   beide Enden einer Lamelle (Se) eines äußeren Zwischenstegteils (26e), der einen bei Fahrzeuginstallation äußeren Teil der Zwischenstegteile (26) darstellt, jeweils zu Hauptrillen (14, 18) offen ist,
   ein Winkel einer Lamelle (Se) des äußeren Zwischenstegteils (26e) kleiner ist als ein Winkel einer Lamelle (Sc) des Mittenstegteils (22) und ein Winkel einer Lamelle (Si) eines inneren Zwischenstegteils (26i), der einen bei Fahrzeuginstallation inneren Teil der Zwischenstegteile (26) darstellt, und "Winkel einer Lamelle" einen Winkel einer geraden Linie, die beide Enden einer Lamelle quer zur Reifenumfangsrichtung verbindet, bedeutet und wobei "Blockteil" ein Begriff ist, der nicht nur einen Block (Bi, Be), der einen ganzen Umfang aufweist, der durch Rillen (20, 16, 14, 18) und Lamellen (Si, Se), wobei sich beide Ende der Lamellen zu Hauptrillen öffnen, definiert wird, sondern ebenfalls einen Block (Bc), der von einer Rippe vorspringt, einschließt.

2. Luftreifen (10) nach Anspruch 1, wobei sich die mittleren Winkel von Lamellen (S) zwischen den mehreren Stegteilen (22, 26, 30) voneinander unterscheiden und "mittlere Winkel von Lamellen" das einfache Mittel von Lamellenwinkeln über die Reifenumfangsrichtung bedeutet.

3. Luftreifen (10) nach Anspruch 2, wobei ein Winkel einer Lamelle (Sc), die in dem Mittenstegteil (22) gebildet ist, größer ist als ein Winkel einer Lamelle (Si), die in dem inneren Zwischenstegteil (26i) gebildet ist.

4.  Luftreifen (10) nach einem der Ansprüche 1 bis 3, wobei
eine Lamelle (Si) des inneren Zwischenstegteils (26i) Folgendes aufweist:

einen ersten Lamellenteil (Sip), der auf einer bei Fahrzeuginstallation inneren Seite angeordnet ist, und einen zweiten Lamellenteil (Sig), der mit dem ersten Lamellenteil (Sip) in Verbindung steht und auf einer gegenüber dem ersten Lamellenteil (Sip) bei Fahrzeuginstallation äußeren Seite angeordnet ist, und ein Lamellenwinkel des ersten Lamellenteils (Sip) größer ist als ein Lamellenwinkel des zweiten Lamellenteils (Sig) und "Lamellenwinkel" einen Winkel einer geraden Linie, die beide Enden eines Lamellenteils in Reifenquerrichtung verbindet, zu der Reifenumfangsrichtung bedeutet.

5.  Luftreifen (10) nach einem der Ansprüche 1 bis 4, wobei eine Rillenbreite einer äußeren Schulterhauptrille (18), die einen äußeren Schulterstegabschnitt (30e), der einen bei Fahrzeuginstallation äußeren Teil der Schulterstegteile (30) darstellt, und den äußeren Zwischenstegteil (26e) trennt, von den Hauptrillen (14, 16, 18, 20) kleiner ist als eine Rillenbreite einer äußeren Mittenhauptrille (14), die den äußeren Zwischenstegteil (26e) und den Mittenstegteil (22) trennt.

6.  Luftreifen (10) nach einem der Ansprüche 1 bis 5, wobei eine Rillenbreite einer inneren Schulterhauptrille (20), die einen inneren Schulterstegabschnitt (30i), der einen bei Fahrzeuginstallation inneren Teil der Schulterstegteile (30) darstellt, und den inneren Zwischenstegteil (26i) trennt, von den Hauptrillen (14, 16, 18, 20) kleiner ist als eine Rillenbreite einer inneren Mittenhauptrille (16), die den inneren Zwischenstegteil (26i) und den Mittenstegteil (22) trennt.

7.  Luftreifen (10) nach einem der Ansprüche 1 bis 6, wobei
jeder von allen der mehreren Blockteile (B), wenigstens betrachtet von einer in einer Reifenradialrichtung äußeren Seite, in einem spitzen Winkelteil von einer in einer Reifenradialrichtung äußeren Seite abgeschrägt ist und eine Fläche einer abgeschrägten Oberfläche des Mittenstegteils (22) kleiner ist als eine Fläche einer abgeschrägten Oberfläche der Zwischenstegteile (26) und der Schulterstegteile (30), wenn eine durch Abschrägen gebildete abgeschrägte Oberfläche von einer in einer Reifenradialrichtung äußeren Seite betrachtet wird.

**Revendications**

1.  Bandage pneumatique (10) à sculpture asymétrique, comportant plusieurs parties d'appui (22, 26, 30) séparées par quatre rainures principales (14, 16, 18, 20) s'étendant dans une direction circonférentielle du bandage pneumatique, dans une partie de bande de roulement (12), dans lequel :

les plusieurs parties d'appui (22, 26, 30) incluent :

une bande d'appui centrale (22) ;
des parties d'appui intermédiaires (26) respectivement adjacentes aux deux côtés de la partie d'appui centrale (22) ; et
des parties d'appui d'épaulement (30) respectivement adjacentes aux côtés externes transversaux des parties d'appui intermédiaires (26) ;

la partie d'appui centrale (22) et les parties d'appui intermédiaires (26) comportent plusieurs parties de pavés (B) comportant des côtés externes, dans une direction radiale du bandage pneumatique, séparés dans une direction circonférentielle du bandage pneumatique uniquement par de lamelles (S) ;
une lamelle (Sc) formée dans la partie d'appui centrale (22) communique avec une rainure principale (16) uniquement sur un côté interne de l'installation sur le véhicule ;
**caractérisé en ce que** :

les deux extrémités d'une lamelle (Sc) d'une partie d'appui intermédiaire externe (26e), constituant une partie externe d'installation sur le véhicule des parties d'appui intermédiaires (26), sont respectivement ouvertes vers les rainures principales (14, 18) ;
un angle d'une lamelle (Se) de la partie d'appui intermédiaire externe (26e) est inférieur à un angle d'une lamelle (Sc) de la partie d'appui centrale (22) et une lamelle (Si) d'une partie d'appui intermédiaire interne (26i) constitue une partie interne d'installation sur le véhicule des parties d'appui intermédiaires (26), le terme « angle d'une lamelle » désignant un angle d'une ligne droite connectant les deux extrémités transversales d'une lamelle du bandage pneumatique à la direction circonférentielle du bandage pneumatique ; et dans lequel le terme « partie de pavé » est un concept incluant non seulement un pavé (Bi, Be) dont l'ensemble de la circonférence est défini par des rainures (20, 16, 14, 18) et des lamelles (Si, Se), les deux extrémités des lamelles étant ouvertes vers les rainures principales, mais aussi un pavé (Bc) débordant d'une nervure.

**2.** Bandage pneumatique (10) selon la revendication 1, dans lequel des angles moyens des lamelles (S) sont différents les uns des autres entre les plusieurs parties d'appui (22, 26, 30), le terme « angles moyens des lamelles » désignant la simple moyenne des angles de lamelle par rapport à la direction circonférentielle.

**3.** Bandage pneumatique (10) selon la revendication 2, dans lequel un angle d'une lamelle (Sc) formé dans la partie d'appui centrale (22) est supérieur à un angle d'une lamelle (Si) formé dans la partie d'appui intermédiaire interne (26i).

**4.** Bandage pneumatique (10) selon l'une quelconque des revendications 1 à 3, dans lequel :

une lamelle (Si) de la partie d'appui intermédiaire (26i) comporte :

une première partie de lamelle (Sip) positionnée sur un côté interne d'installation sur le véhicule ; et
une deuxième partie de lamelle (Sig) communiquant avec la première partie de lamelle (Sip) et positionnée sur un côté d'installation sur le véhicule situé plus à l'extérieur que la première partie de lamelle (Sip) ; et

un angle de lamelle de la première partie de lamelle (Sip) est supérieur à un angle de lamelle de la deuxième partie de lamelle (Sig), le terme « angle de lamelle » désignant un angle d'une ligne droite, connectant les deux extrémités transversales d'une partie de lamelle du bandage pneumatique, par rapport à la direction circonférentielle du bandage pneumatique.

**5.** Bandage pneumatique (10) selon l'une quelconque des revendications 1 à 4, dans lequel une largeur de rainure d'une rainure principale d'épaulement externe (18), divisant une partie d'appui d'épaulement externe (30e), constituant une partie externe de montage sur le véhicule des parties d'appui d'épaulement, (300) et la partie d'appui intermédiaire externe (26e) des rainures principales (14, 16, 18, 20) est inférieure à une largeur de rainure d'une rainure principale centrale externe (14), divisant la partie d'appui intermédiaire externe (26 e) et la partie d'appui centrale (22).

**6.** Bandage pneumatique (10) selon l'une quelconque des revendications 1 à 5, dans lequel une largeur de rainure d'une rainure principale d'épaulement interne (20), divisant une partie d'appui d'épaulement interne (30i), constituant une partie interne d'installation sur le véhicule des parties d'appui d'épaulement (30) et la partie d'appui intermédiaire interne (26i) des rainures principales (14, 16, 18, 20) est inférieure à une largeur de rainure d'un rainure principale centrale interne (16), divisant la partie d'appui intermédiaire interne (26i) et la partie d'appui centrale (22).

**7.** Bandage pneumatique (0) selon l'une quelconque des revendications 1 à 6, dans lequel :

chacune de l'ensemble des plusieurs parties d'appui (B) est chanfreinée à partir d'un côté externe, dans une direction radiale du bandage pneumatique, au niveau d'une partie à angle aigu, vue au moins à partir d'un côté externe, dans une direction radiale du bandage pneumatique ; et
une aire d'une surface chanfreinée de la partie d'appui centrale (22) est plus petite qu'une aire d'une surface chanfreinée des parties d'appui intermédiaires (26) et des parties d'appui d'épaulement (30) lorsqu'une surface chanfreinée formée par chanfreinage est vue à partir d'un côté externe, dans une direction radiale du bandage pneumatique.

FIG. 1

# FIG. 2

## FIG. 3

## FIG. 4

## FIG. 5

# FIG. 6

# FIG. 7

# FIG. 8

# FIG. 9

# FIG. 10

## FIG. 11

## FIG. 12

## FIG. 13

Sig

Sm

Sip

## FIG. 14

Sig

Sm

Sip

## FIG. 15

Sig

Sm

Sip

FIG. 16

30i(30)  26i(26)  22  26e(26)  30e(30)

20  16  14  18

Bi
Lb
30d  R
La  Bc
Si(S)  Sig  La
Sip  M
R
Bi  R
Bc
Sig  F
Sip  Sc
Si

22d

F
Lb
La
EG
Sc(S)

Se(S)
Be
La
Se
Be

30d
30ed

AE

(INSTALLATION
INNER SIDE)

(INSTALLATION
OUTER SIDE)

Bi(B)  AE  Bc(B)  Be(B)

12(10)

EP 3 238 959 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010212792 A
- EP 2792505 A
- JP S62268707 B
- JP 2013169886 A
- JP 2012116306 A